# EUROPÄISCHE PATENTANMELDUNG

(11) **EP 1 023 930 A1**
(43) Veröffentlichungstag der Anmeldung: **02.08.2000**
(21) Anmeldenummer: 99125294.1
(22) Anmeldetag: 18.12.1999
(51) Int. Cl.: B01D 24/22, B01D 24/46, C02F 3/06

(54) **Spülbare Filteranlage sowie Verfahren zum Betrieb derselben**

(30) Priorität: 27.01.1999 DE 19903103
(71) Anmelder: VA TECH WABAG GmbH Butzbach, 35510 Butzbach (DE)
(72) Erfinder: Schmidt, Rolf, 35305 Grünberg (DE)
(74) Vertreter: Grättinger & Partner (GbR)

(57) **Zusammenfassung**

Eine spülbare Filteranlage umfaßt eine Mehrzahl von Filterzellen (1.1 - 1.n), von denen jede eine Filterpackung, einen darüber angeordneten Überstauraum und einen darunter angeordneten Polsterraum aufweist, eine die Filterzellen (1.1 - 1.n) mit Rohwasser versorgende, an die Überstauräume angeschlossene Rohwasserzufuhr (2, 3.1 - 3.n, 4.1 - 4.n) und einen gemeinsamen, an die Polsterräume angeschlossenen Filtratkanal (7) mit Klarwasserablauf (8). Dabei ist jeder Polsterraum über eine Filtratpumpe (6.1 - 6.n) an den Filtratkanal (7) angeschlossen.

## Beschreibung

Die vorliegende Erfindung betrifft eine spülbare Filteranlage, umfassend eine Mehrzahl von Filterzellen, von denen jede eine Filterpackung, einen darüber angeordneten Überstauraum und einen darunter angeordneten Polsterraum aufweist, eine die Filterzellen mit Rohwasser versorgende, an die Überstauräume angeschlossene Rohwasserzufuhr und einen gemeinsamen, an die Polsterräume angeschlossenen Filtratkanal mit Klarwasserablauf. Des weiteren betrifft die vorliegende Erfindung ein Verfahren zum Betrieb einer spülbaren Filteranlage der vorstehend angegebenen Art.

Spülbare Filteranlagen der vorstehend genannten Art sind allgemein bekannt. Sie sind beispielsweise in der EP 0778063 A1 sowie der EP 0863112 A1 beschrieben. Eine vergleichbare Filteranlage geht auch aus der EP 0385050 A1 als bekannt hervor; allerdings durchströmt bei dieser Filteranlage im Filterbetrieb das gesamte Filtrat das/die Spülwasserreservoir(e), wobei die Leitung, welche den Polsterraum mit dem Spülwasserreservoir verbindet, im Filterbetrieb der Filtratabfuhr aus der Filterzelle und im Spülbetrieb - in umgekehrter Richtung durchströmt - der Zufuhr von Spülwasser zu der Filterzelle dient.

Filteranlagen der genannten Art werden im Bereich der Wasser- und Abwassertechnik beispielsweise zum Abtrennen von suspendierten Fettstoffen eingesetzt, wobei in diesem Falle die Filterpackung i. a. körnige Medien enthält. Ebenfalls lassen sich derartige Filteranlagen zur Biofiltration einsetzen; in diesem Falle umfassen die Filterpackungen i. a. als Trägermaterial für Mikroorganismen dienende körnige Medien oder strukturierte Packungen.

Die einzelnen Filterzellen der bekannten Filter- bzw. Biofilteranlagen sind in der Regel parallel durchströmt. Je nach den geodätischen Verhältnissen läuft das zu behandelnde Wasser der Filteranlage frei zu oder wird über ein Pumpwerk auf das erforderliche Niveau gehoben. Zur Gleichverteilung sind im Zulauf der einzelnen Filterzellen Überfallschwellen angeordnet.

Da sich die aus dem Rohwasser herauszufilternden Feststoffe und/oder Mikroorganismen in bzw. auf den körnigen Medien bzw. strukturierten Packungen der Filterpackung anhäufen und so die Anlage verstopfen würden, müssen die Filterzellen von Zeit zu Zeit gespült werden, um weiterhin Verwendung finden zu können. Zur Spülung, d.h. intensiven Waschung der körnigen Medien bzw. strukturierten Packungen haben sich die Luft- und/oder Luft/Wasser-Spülung zum Lösen des Schmutzes und bei der kombinierten Luft/Wasser-Spülung auch zum gleichzeitigen Austrag des vom Filterkorn bzw. der strukturierten Packung abgelösten Schmutzes sehr bewährt. Zur Nachreinigung oder auch zum Trennen der Filtermedien kommt in der Regel zum Schluß des Spül- bzw. Waschvorganges noch eine reine Wasserspülung zur Anwendung. In der Praxis erprobte Spülprogramme sind beispielsweise in der EP 0778063 A1 und der EP 0385050 A1 beschrieben.

Zur Durchführung der Spülung der Filterzellen dient bei bekannten gattungsgemäßen Filteranlagen eine separate Spülwassereinrichtung, die in aller Regel Spülwasserpumpen und Spülluftgebläse sowie entsprechende Spülwasserkollektoren und -speicher und Rohrleitungsnetze zum Vorhalten bzw. zur Förderung und Verteilung des Spülwassers und der Spülluft umfaßt. Bei der aus der EP 0778063 A1 bekannten Spüleinrichtung ist zwar auf Spülwasserpumpen verzichtet worden; dafür ist jedoch ein "Spülmedienkanal" vorgesehen, in welchem mittels eines Spülluftgebläses ein Überdruck erzeugt werden kann, um das für die Wasserspülung erforderliche Druckgefälle bereitzustellen.

Wie auch immer die Spülwassereinrichtung bekannter gattungsgemäßer Filteranlagen im einzelnen ausgeführt ist, stets ist mit deren Installation ein ganz erheblicher apparativer Aufwand sowie entsprechender Raumbedarf verbunden, was sich in dementsprechend hohen Investitionskosten niederschlägt.

Aus der DE 4142890 A1 sind ein Verfahren sowie eine Vorrichtung zum Reinigen von Abwässern bekannt, wobei die Verunreinigungen in einem Homogenisator fein dispergiert (Partikelgröße nicht größer als 1 um) und anschließend in Reaktionsbehältern abgebaut werden. Die einzelnen Reaktionsbehälter sind dabei über Leitungen mit jeweils einer Pumpe miteinander verbunden. Das Verfahren soll rückstandsfrei arbeiten, so daß eine zum Austrag von Rückständen dienende Spülung nicht vorgesehen ist.

Aus den oben angegebenen Nachteilen gattungsgemäßer Filteranlagen leitet sich die der vorliegenden Erfindung zugrundeliegende Aufgabenstellung ab, die darin besteht, eine spülbare Filteranlage der eingangs genannten Art zu schaffen, bei deren Bau und Betrieb geringere Investitions- und Betriebskosten anfallen als beim Stand der Technik. Eine weitere der vorliegenden Erfindung zugrundeliegende Aufgabenstellung ist darin zu sehen, ein Verfahren zum Betrieb einer spülbaren Filteranlage anzugeben, das sich durch einen vereinfachten Filtrations- und Spülbetrieb auszeichnet.

Gemäß der vorliegenden Erfindung wird diese Aufgabe bei einer gattungsgemäßen spülbaren Filteranlage dadurch gelöst, daß jeder Polsterraum über eine Filtratpumpe an den Filtratkanal angeschlossen ist. Die erfindungsgemäße Filteranlage zeichnet sich mit anderen Worten dadurch aus, daß jeder einzelnen Filterzelle eine Filtratpumpe zugeordnet ist, die im Filterbetrieb Filtrat aus dem betreffenden Polsterraum in den Filtratkanal fördert bzw. fördern kann. Die herkömmlicherweise eingesetzte Filtratklappenregelung der Filterzellen wird somit im Rahmen der vorliegenden Erfindung durch jeweils eine Filtratpumpe pro Filterzelle ersetzt. Das Ergebnis hiervon ist, daß der für die Spüleinrichtung erforderliche Aufwand drastisch reduziert werden kann. Insbesondere kommt die erfindungsgemäße Filteranlage ohne separaten Filtratspeicher, Spülwasserpumpen und Spülwasserkollektor aus. Die Aufgabe des Spülwasserkollektors kann bei der erfindungsgemäßen Filteranlage durch den Filtratkanal wahrgenommen werden, denn durch den erfindungsgemäßen Einsatz der Filtratpumpen ist die Filterleistung der nicht gespülten Filterzellen nicht von einem bestimmten Niveauunterschied zwischen den Wasserständen im Überstauraum einerseits und im Filtratkanal andererseits abhängig. Im Ergebnis bedeutet dies, daß der Wasserspiegel des Filtrats im Filtratkanal - zumindest zeitweise - auf einem Niveau liegen bzw. auf ein Niveau angehoben werden kann, das für eine Spülung der zu spülenden Filterzelle ohne weitere druckerhöhende Maßnahmen, allein durch das hydrostatische Gefälle ausreicht.

Von besonderem Vorteil ist es, wenn die Filtratpumpen als Verdrängerpumpen ausgeführt sind. Derartige Verdrängerpumpen fördern weitgehend druckunabhängig, so daß unabhängig von dem augenblicklichen Niveau des Wasserstandes des Filtrats im Filtratkanal vorgegebene Filtrationsgeschwindigkeiten, die sich zudem von Filterzelle zu Filterzelle unterscheiden können, einstellbar sind. Vorteilhaft ist des weiteren, daß sich bei Verdrängerpumpen die Förderrichtung umkehren läßt. Dies läßt sich bei der Spülung nutzen, wie weiter unten in größerem Detail dargelegt werden wird. Besonders geeignet für den Einsatz als Filtratpumpen sind Drehkolbenpumpen.

Neben der weiter oben dargelegten anlagentechnischen Vereinfachung der Spüleinrichtung zeichnet sich die erfindungsgemäße Filteranlage durch eine ganze Reihe weiterer Vorteile aus. So ist beispielsweise unabhängig von den geodätischen Verhältnissen ein Zulaufpumpwerk nicht erforderlich. Die Filteranlage kann weitgehend unabhängig von örtlichen Wasserspiegellagen (NKB-Vorfluter) konzipiert werden. In diesem Zusammenhang ist auch von Bedeutung, daß der Wasserspiegel im Überstauraum der Filterzellen niedriger sein kann als die Ablaufhöhe des Filtrats aus dem Filtratkanal. Ferner ist ein vorteilhaftes Merkmal der erfindungsgemäßen Filteranlage, daß die Überstauräume der Filterzellen als Spülwasserreservoir genutzt werden können; insbesondere können Filterzellen, die sich aufgrund geringen Rohwasseranfalls in "Wartestellung" befinden, das zur Spülung einer Filterzelle benötigte Spülwasser bereitstellen, indem ihre Filtratpumpen - bei geschlossenem Rohwasserzulauf - eingeschaltet werden. Freilich wird auf diese Möglichkeit im allgemeinen nur dann zurückgegriffen werden, wenn die Menge des Filtrats der im Filterbetrieb arbeitenden Filterzellen geringer ist als die für die Spülung benötigte Spülwassermenge. Vorteilhaft wirkt sich ferner aus, daß kleine und mittlere Filteranlagen in Anwendung der vorliegenden Erfindung modulartig aufgebaut werden können. Auch der Umstand, daß die erfindungsgemäße Filteranlage im Konstantbetrieb arbeiten kann, jedoch nicht muß, ist als ein bedeutender Vorteil anzusehen. Gerade durch die Kombination der vorliegenden Erfindung mit der in der EP 0863112 A1 beschriebenen Steuerung der Filteranlage ("Konstantbetrieb") ergibt sich ein besonders günstiges Betriebsverhalten.

Eine bevorzugte Weiterbildung der erfindungsgemäßen Filteranlage zeichnet sich dadurch aus, daß der Filtratkanal mit jedem der Polsterräume über eine absperrbare Spülleitung verbunden ist. Diese ist zweckmäßigerweise so dimensioniert, daß sich bei vollständig geöffneter Spülarmatur und vorgegebenem Gefälle zwischen dem Wasserstand im Filtratkanal einerseits und dem Wasserstand im Überstauraum der zu spülenden Filterzelle andererseits der optimale Spülwasserdurchsatz ergibt.

Eine wiederum andere Weiterbildung der Erfindung ist dadurch gekennzeichnet, daß der Klarwasserablauf des Filtratkanals zwei auf unterschiedlichem Niveau angeordnete Abflußstutzen umfaßt, von denen der niedrigere absperrbar ist. Auf diese Weise lassen sich mit besonders geringem technischen Aufwand zwei unterschiedliche Wasserspiegelniveaus im Filtratkanal einstellen, wobei nur im Falle der Spülung der Filterzelle der hohe, für die Spülung benötigte Wasserstand eingestellt wird. Arbeiten sämtliche Filterzellen im Filterbetrieb bzw. sind sie in Wartestellung, so ist der Wasserspiegel im Filtratkanal auf das niedrige Niveau eingestellt, um einen unnötigen Leistungsbedarf der Filtratpumpen zu vermeiden.

Die vorliegende Erfindung läßt sich unabhängig davon einsetzen, ob zusätzlich zur Wasserspülung eine - dieser im allgemeinen vorausgehende - Luftspülung und/oder kombinierte Luft/Wasser-Spülung vorgesehen ist oder nicht. Ist, sowie dies im allgemeinen der Fall sein wird, eine derartige Luftspülung bzw. kombinierte Luft/Wasserspülung vorgesehen, so umfaßt die Filteranlage in als solches bekannter Weise ergänzend eine Spülluftversorgung mit einem Spülluftgebläse und einem in jedem der Polsterräume mündenden Spülluftleitungsnetz.

Eine Filteranlage mit den vorstehend angegebenen technisch-konstruktiven Merkmalen wird gemäß einem weiteren Aspekt der vorliegenden Erfindung wie folgt betrieben: Eine Mehrzahl von Filterzellen arbeitet im Überstaubetrieb, d.h. über FU-geregelte Filtratpumpen wird das Niveau in den aktiven Filterzellen konstant gehalten. Dabei läuft die Filteranlage zweckmäßigerweise im Konstantbetrieb, wie er in der EP 0863112 A1 im Detail beschrieben ist. Mit zunehmender Beladung der Filterpackung erhöht sich der Differenzdruck.

Überschreitet der Differenzdruck einer Filterzelle einen vorgegebenen Grenzwert, wird die Spülung dieser Filterzelle ausgelöst, sofern nicht gerade eine andere Filterzelle gespült wird. Zur Spülung einer Filterzelle schließt deren Rohwasserarmatur. Die Filtratpumpe läuft weiter, um den Überstau abzufiltrieren. Anschließend und/oder ergänzend wird der (restliche) Überstau über die Schlammwasserklappe in den Schlammwasserkanal abgeschlagen. Anschließend werden bei einer Normalspülung mit einer Luft- und Luft/Wasser-Phase die Feststoffe aus dem Kornmassenbett in den Überstauraum gespült und anschließend mit leichtem Nachspülen in den Schlammwasserkanal abgelassen. Nach diesem Feststoffaustrag erfolgt die Trennspülung und Klassierung des Kornmassenbettes durch Aufstau mit Filtrat bis zum Betriebsniveau. Für diese Spülung wird zuvor der untere Abflußstutzen des Klarwasserablaufs des Filtratkanals abgesperrt, um das Wasserstandsniveau im Filtratkanal anzuheben. Die Spülung erfolgt dabei über eine Spülleitung, welche die zu spülende Filterzelle mit dem Filtratkanal verbindet. Nach Aufstau des Überstauraumes mit Filtrat bis zum Betriebsniveau wird die Rohwasserarmatur der gespülten Filterzelle geöffnet, und die Filtratpumpe dieser Filterzelle geht in den Regelbetrieb.

Ohne Bedeutung für das vorstehend angegebene Verfahren ist, ob als Auslösekriterium für die Filterspülung die Filterlaufzeit, der Differenzdruck innerhalb der Filterpackung, eine Kombination dieser Kriterien oder aber andere Kriterien verwendet werden.

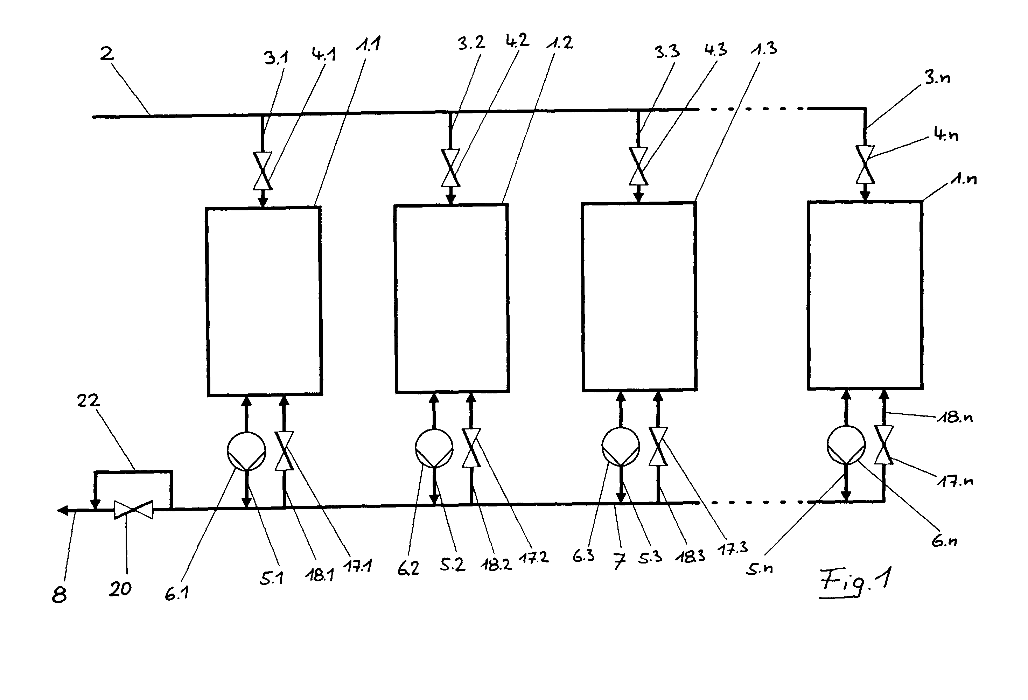

Im Folgenden wird die vorliegende Erfindung anhand der Zeichnung näher erläutert. Dabei zeigt
- Fig. 1: schematisch eine mehrere Filterzellen umfassende Filteranlage gemäß der vorliegenden Erfindung und

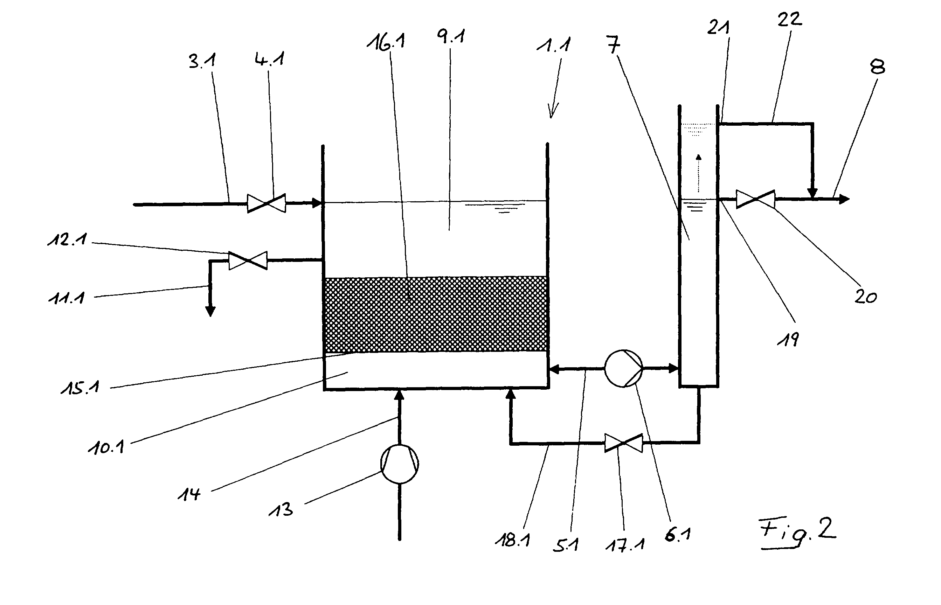

- Fig. 2: eine einzelne Filterzelle der in Fig. 1 dargestellten Filteranlage.

Die Zeichnung zeigt eine Filter- oder Biofilteranlage mit mehreren parallel durchflossenen Filterzellen 1.1 bis 1.n. Aus einem gemeinsamen Zulauf 2 fließen die Teilströme 3.1 bis 3.n durch die Rohwasserarmaturen 4.1 bis 4.n in die Filterzellen ein, durchströmen diese und werden über die Filtratabläufe 5.1 bis 5.n mit den Pumpen 6.1 bis 6.n in den Filtratkanal 7 gefördert. Der Filtratkanal mündet im Auslauf 8. Die Filtratpumpen 6.1 bis 6.n halten den Wasserspiegel in den Überstauräumen 9.1 bis 9.n der Filterzellen 1.1 bis 1.n auf einem bestimmten Niveau. Wird in einer der Filterzellen - im folgenden Beispiel die Filterzelle 1.1 - ein bestimmter Differenzdruck zwischen Überstauraum z. B. 9.1 und Polsterraum 10.1 erreicht, muß diese Filterzelle gespült werden.

Die Rohwasserklappe 4.1 schließt. Das Rohwasser im Überstauraum wird auf ein bestimmtes Niveau abgesenkt. Dies geschieht entweder durch Abschlagen als Schlammwasser in die Schlammwasserleitung 11.1 über die Schlammwasserklappe 12.1 oder durch Abfiltrieren mit der Filtratpumpe 6.1 über die Filtratleitung 5.1 in den Filtratkanal 7 bzw. auch in Kombination. Nach der Absenkung erfolgt eine Luftspülung. Mit dem Gebläse 13 wird Luft über das Leitungsnetz 14 in den Polsterraum 10.1 gedrückt. Die Spülluft verteilt sich unter dem Düsenboden 15.1 und steigt in das Kornmassenbett 16.1 auf.

Nach einer bestimmten Zeit fördert die Filtratpumpe 6.1 Filtrat aus dem Filtratkanal 7 in den Polsterraum 10.1. Die Filtratpumpe 6.1 fördert dabei in umgekehrter Richtung. Mit dieser "kleinen Wassermenge" (z. B. ca. 12 - 15 m³/m².h) beginnt die Luft/Wasserspülung. Erreicht das Niveau im Überstauraum 9.1 eine bestimmte Höhe schaltet das Gebläse 13 ab.

Nun beginnt die reine Wasserspülung mit der "großen Wassermenge" (z. B. ca. 70 m³/m²·h). Während das Gebläse 13 abschaltet, läuft die Filtratpumpe 6.1 weiter, und die Spülwasserarmatur 17.1 in der Spülleitung 18.1 öffnet. Gleichzeitig schließt die dem unteren Abflußstutzen 19 zugeordnete Armatur 20 im Ablauf des Filtratkanals 7 und die Filtratpumpen 6.2 bis 6.n erhöhen, sofern die aktuell anfallende Filtratmenge geringer ist als die "große Spülwassermenge", die Fördermenge entsprechend.

Durch das Schließen der Ablaufarmatur 20 erhöht sich die Ablaufhöhe. Dadurch fließt das Filtrat der filtrierenden Filterzellen als Spülwasser durch die Armatur 17.1 der zu spülenden Filterzelle 1.1. Steigt der Druck beim Spülen mit der "großen Wassermenge" über die neue Ablaufhöhe an, kann das überschüssige Filtrat über den einem zweiten Abflußstutzen 21 zugeordneten Überlauf 22 in den Auslauf 8 fließen. Erreicht das Niveau im Überstauraum 9.1 einen max. Füllstand, schließt die Spülwasserarmatur 17.1 und die Filtratpumpen 6.2 bis 6.n gehen in Regelbetrieb, während die Filtratpumpe 6.1 mit der "kleinen Wassermenge" durchläuft.

Anschließend öffnet die Schlammwasserarmatur 12.1 und schlägt das Schlammwasser über die Leitung 11.1 ab. Nach einer bestimmten Wartezeit schließt die Schlammwasserarmatur 12.1, und mit der "großen Wassermenge" wird die Filterzelle 1.1 aufgestaut. Dazu wird die Fördermenge der Filtratpumpen 6.2 bis 6.n bei geöffneter Spülwasserarmatur 17.1 auf die "große Wassermenge" erhöht, sofern die aktuell im Regelbetrieb anfallende Filtratmenge geringer ist als die "große Wassermenge".

Erreicht das Niveau im Überstauraum 9.1 einen max. Füllstand, schließt die Spülwasserarmatur 17.1, die Filtratpumpen 6.1 bis 6.n gehen in Regelbetrieb und die Ablaufarmatur 20 öffnet wieder.

Die Spülung der Filterzelle 1.1 ist abgeschlossen. Die Filterspülung ohne den üblichen Filtratspeicher wird möglich, indem die aktuell anfallende Filtratmenge - ggf. unter vorübergehender Absenkung des Wasserspiegels in den Überstauräumen 9.2 bis 9.n - genutzt wird.

Die vorstehende Beschreibung bezieht sich auf die Situation, daß - unabhängig vom aktuellen Rohwasserzulauf - sämtliche Filterzellen in Betrieb sind.

Wird hingegen die Filteranlage im Konstantbetrieb (EP 0863112 A1) gefahren, so wird, wenn die aktuell anfallende Filtratmenge aufgrund geringen Rohwasserzulaufs geringer ist als die zur Spülung mit der "großen Wassermenge" benötigte Spülwassermenge, eine oder mehrere in Ruhestellung wartende Filterzellen für die Spülung zugeschaltet, so daß deren Überstau abgesenkt wird. Da die in Ruhestellung wartenden Filterzellen, bevor sie in Wartestellung versetzt wurden, gespült worden sind, besteht keine Gefahr, daß sich durch die abrupte Inbetriebnahme Verschmutzungen lösen und die Filtratqualität verschlechtern. Aus diesem Grunde ist die erfindungsgemäße Spültechnik besonders vorteilhaft, wenn die Filteranlage im Konstantbetrieb gefahren wird.

## Patentansprüche

1. Spülbare Filteranlage, umfassend eine Mehrzahl von Filterzellen (1.1 - 1.n), von denen jede eine Filterpackung (16.1 - 16.n), einen darüber angeordneten Überstauraum (9.1 - 9.n) und einen darunter angeordneten Polsterraum (10.1 - 10.n) aufweist, eine die Filterzellen (1.1 - 1.n) mit Rohwasser versorgende, an die Überstauräume (9.1 - 9.n) angeschlossene Rohwasserzufuhr (2, 3.1 - 3.n, 4.1 - 4.n) und einen gemeinsamen, an die Polsterräume (10.1 - 10.n) angeschlossenen Filtratkanal (7) mit Klarwasserablauf (8),
dadurch gekennzeichnet,
daß jeder Polsterraum (10.1 - 10.n) über eine Filtratpumpe (6.1 - 6.n) an den Filtratkanal (7) angeschlossen ist.

2. Filteranlage nach Anspruch 1,
dadurch gekennzeichnet,
daß die Filtratpumpen (6.1 - 6.n) als Verdrängungspumpen ausgeführt sind.

3. Filteranlage nach einem der Ansprüche 1 oder 2,
dadurch gekennzeichnet,
daß der Filtratkanal (7) mit jedem der Polsterräume (10.1 - 10.n) über eine absperrbare Spülleitung (18.1 - 18.n) verbunden ist.

4. Filteranlage nach einem der Ansprüche 1 bis 3,
dadurch gekennzeichnet,
daß der Klarwasserablauf (8) zwei auf unterschiedlichem Niveau angeordnete Abflußstutzen (19, 21) umfaßt.

5. Filteranlage nach Anspruch 4,
dadurch gekennzeichnet,
daß der niedrigere Abflußstutzen (19) absperrbar ist.

6. Filteranlage nach einem der Ansprüche 1 bis 5,
dadurch gekennzeichnet,
daß eine Spülluftversorgung mit einem Spülluftgebläse (13) und einem in jedem der Polsterräume (10.1 - 10.n) mündenden Spülluftleitungsnetz (14) vorgesehen ist.

7. Filteranlage nach einem der Ansprüche 1 bis 6,
dadurch gekennzeichnet,
daß mit jedem Überstauraum (9.1 - 9.n) ein Schlammwasserablauf (11.1 - 11.n) mit einer dicht oberhalb der Filterpackung angeordneten Schlammwasserklappe (12.1 - 12.n) verbunden ist.

8. Verfahren zum Filtern von Substrat unter Verwendung einer spülbaren Filteranlage mit einer Mehrzahl von Filterzellen (1.1 - 1.n), von denen jede eine Filterpackung (16.1 - 16.n), einen darüber angeordneten Überstauraum (9.1 - 9.n) und einen darunter angeordneten Polsterraum (10.1 - 10.n) aufweist, einer die Filterzellen (1.1 - 1.n) mit Rohwasser versorgenden, an die Überstauräume (9.1 - 9.n) angeschlossenen Rohwasserzufuhr (2, 3.1 - 3.n, 4.1 - 4.n) und einem gemeinsamen, an die Polsterräume (10.1 - 10.n) über jeweils eine Filtratpumpe (6.1 - 6.n) sowie eine absperrbare Spülleitung (18.1 - 18.n) angeschlossenen Filtratkanal (7) mit Klarwasserablauf (8), der zwei auf unterschiedlichem Niveau angeordnete Abflußstutzen (19, 21) umfaßt, von denen der niedrigere absperrbar ist, wobei mit jedem Überstauraum (10.1 - 10.n) ein Schlammwasserablauf (11.1 - 11.n) mit einer dicht oberhalb der Filterpackung (16.1 - 16.n) angeordneten Schlammwasserklappe (12.1 - 12.n) verbunden ist, umfassend die folgenden Schritte:
- Betreiben einer Mehrzahl von Filterzellen (1.1 - 1.n) im Filterbetrieb,
- Durchführen einer Spülung bei einer (1.1) der Filterzellen, wobei
- die Rohwasserarmatur (4.1) der zu spülenden Filterzelle (1.1) geschlossen wird,
- der Überstau durch Abfiltrieren und/oder Abzug durch den Schlammwasserablauf (11.1) abgebaut wird,
- die Filtratpumpe (6.1) abgestellt wird,
- der untere Abflußstutzen (19) des Klarwasserablaufs (8) abgesperrt wird,
- die Spülleitung (18.1) der zu spülenden Filterzelle geöffnet wird,
- das Schlammwasser aus der zu spülenden Filterzelle (1.1) durch deren Schlammwasserklappe (12.1) abgezogen wird,
- der Überstauraum (9.1) aufgestaut wird,
- die Spülleitung (18.1) wieder geschlossen wird,
- der untere Abflußstutzen (19) des Klarwasserablaufs (8) geöffnet und
- die Filtratpumpe (6.1) der gespülten Filterzelle (1.1) wieder eingeschaltet wird.

9. Verfahren nach Anspruch 8,
dadurch gekennzeichnet,
daß der Wasserspülung eine Luftspülung und/oder eine kombinierte Luft/Wasser-Spülung vorausgeht.

10. Verfahren nach Anspruch 9,
dadurch gekennzeichnet,
daß während der kombinierten Luft/Wasser-Spülung die Filtratpumpe (6.1) der zu spülenden Filterzelle (1.1) zur Spülung eingesetzt wird.

11. Verfahren nach einem der Ansprüche 8 bis 10,
dadurch gekennzeichnet,
daß vor Beginn der Wasserspülung mindestens eine ruhende Filterzelle zugeschaltet wird.

12. Verfahren nach einem der Ansprüche 8 bis 11,
dadurch gekennzeichnet,
daß bei geöffneter Spülleitung (18.1) der zu spülenden Filterzelle die dieser zugeordnete Filtratpumpe (6.1) zur Spülung mit umgekehrter Durchflußrichtung eingesetzt wird.
